# EUROPEAN PATENT APPLICATION

(11) **EP 0 959 604 A1**
(43) Date of publication of application: **24.11.1999**
(21) Application number: 98440104.2
(22) Date of filing: 20.05.1998
(51) Int. Cl.: H04M 1/66, H04M 1/72

(54) **Selective alerting among multiple analogue terminals connected in parallel**

(71) Applicant: ALCATEL, 75088 Paris (FR)
(72) Inventor: Le Creff, Michel, 95450 Vigny (FR); Loeillet, Patrick, 67200 Strasbourg (FR)
(74) Representative: Schätzle, Albin, Dipl.-Phys.

(57) **Abstract**

The disadvantage of parallel analog terminals all reacting to an incoming call can be solved by letting each analog terminal detect a calling line identifcation signal. In case of being individualised with respect to said calling line identification signal, only one of the parallel terminals will generate an alerting signal.

## Description

The invention relates to a telecommunication system comprising
- a first analog terminal system coupled to an analog telephone line and comprising
   first detection means for detecting signalling signals arriving via said analog telephone line, and
   first generation means coupled to said first detection means for generating alerting signals,
- a second analog terminal system coupled to said analog telephone line and comprising
   second detection means for detecting signalling signals arriving via said analog telephone line, and
   second generation means coupled to said second detection means for generating alerting signals.

Such a telecommunication system is of common general knowledge and consists of two or more terminal systems, each one comprising an ordinary analog telephone, for example three telephones connected in parallel in an ordinary house, a first one being located in the living room, a second one being located in the kitchen and a third one being located in the studyroom.

Due to being connected in parallel to said telephone line, an incoming call will cause all three telephones generating a ringing signal.

It is an object of the invention, inter alia, to provide a telecommunication system as described in the preamble which is more sophisticated.

Thereto, the telecommunication system according to the invention is characterised in that
- said first detection means comprise
   first comparing means for comparing at least a first code signal of said signalling signals with a first predefined signal, and
   first activating/deactivating means coupled to said first generation means for activating/deactivating said generating in dependence of said comparing,
- said second detection means comprise
   second comparing means for comparing at least a second code signal of said signalling signal with a second predefined signal, and
   second activating/deactivating means coupled to said second generation means for activating/deactivating said generating in dependence of said comparing.

By providing said terminal systems with said comparing means and said activating/deactivating means, the telecommunication system according to the invention can be adjusted and/or programmed to read differently on different signalling signals.

The invention is based on the insight, inter alia, that in analog telecommunication systems nowadays it is possible to add information to signalling signals.

The invention solves the problem, inter alia, of providing a more sophisticated telecommunication system, by allowing terminal systems to compare and activate/deactivate.

The terms 'analog telecommunication system' and 'analog terminal system' do not exclude the presence of digital parts inside said systems, but refer to said telephone line being an analog one.

A first embodiment of the telecommunication system according to the invention is characterised in that said first predefined signal and said second predefined signal are at least substantially different, with said first code signal and said second code signal either being at least substantially equal or being at least substantially different.

By making said predefined signals different, terminal systems will react differently on the same signalling signals (whereby either those predefined signals are stored for which an alerting signal should be generated or those predefined signals are stored for which an alerting signal should not be generated), and terminal systems will also react differently on different signalling signals (in which case the terminal systems connected in parallel each have their own, different number).

A second embodiment of the telecommunication system according to the invention is characterised in that said first code signal and said second code signal form part of a signalling signal being a so-called calling line identification signal (CLI or CLId or class service like time, date, etc.).

By using this calling line identification signal, via an analog line code signals can be sent to the terminal systems.

A third embodiment of the system according to the invention is characterised in that said first code signal and said second code signal are caller identification signals.

In this case the actual caller line identification signals are used, in other words the actual origination of the call is used for activating/deactivating, a call originating from an other member of the familiy can be directed to the living room, a call originating from a collegue can be directed to the studyroom, and a call originating from the supermarket can be directed to the kitchen.

A fourth embodiment of the system according the invention is characterised in that said first code signal and said second code signal are additional code signals which have been added to caller identification.

In this case the additional code signals are used, in other words the destination of the call is defined at the origination for activating/deactivating. signals, for example in case each one of the parallel terminal systems has got its own, different number, with each code signal being such a number

The invention further relates to an analog terminal system coupled to an analog telephone line and comprising
detection means for detecting signalling signals arriving via said analog telephone line, and
generation means coupled to said first detection means for generating alerting signals.

The analog terminal system according to the invention is characterised in that said detection means comprise
comparing means for comparing at least a code signal of said signalling signals with a predefined signal, and
activating/deactivating means coupled to said generation means for activating/deactivating said generating in dependence of said comparing.

The term 'analog terminal system' does not exclude the presence of digital pads inside said system, but refers to said telephone line being an analog one, and does not exclude the use of a wireless coupling inside said system. Such a terminal system could therefore for example comprise an analog basestation or digital (DECT and/or GSM) basestation and one or more analog handsets or digital (DECT and/or GSM and/or dual-mode) handsets. In this case, for example, the detection means and comparing means could be situated in the basestation, with the generation means and the activating/deactivating means being situated in the handset. In fact, any kind of terminal which can be connected to an analog line (pc/fax/screenphone etc.) can be used.

A first embodiment of the analog terminal system according to the invention is characterised in that said first predefined signal is at least substantially different from a further predefined signal of a further analog terminal system, with said code signal and a further code signal to be compared by said further analog terminal system with said further predefined signal either being at least substantially equal or being at least substantially different.

A second embodiment of the analog terminal system according to the invention is characterised in that said code signal and said further code signal form part of a signalling signal being a so-called calling line identification signal.

A third embodiment of the analog terminal system according to the invention is characterised in that said code signal and said further code signal are caller identification signals.

A fourth embodiment of the analog terminal system according to the invention is characterised in that said code signal and said further code signal are additional code signals which have been added to caller identification signals.

The documents ETS 300659-1 published in February 1991 and ETS 300659-2 published in September 1997 disclose a subscriber line protocol over local loop. In the unpublished European patent applications EP 97401075.3, EP 97401821.0 and EP 97440070.7 other aspects of analog terminals are described. All references, including the references cited with respect to said references, are considered to be incorporated in this patent application.

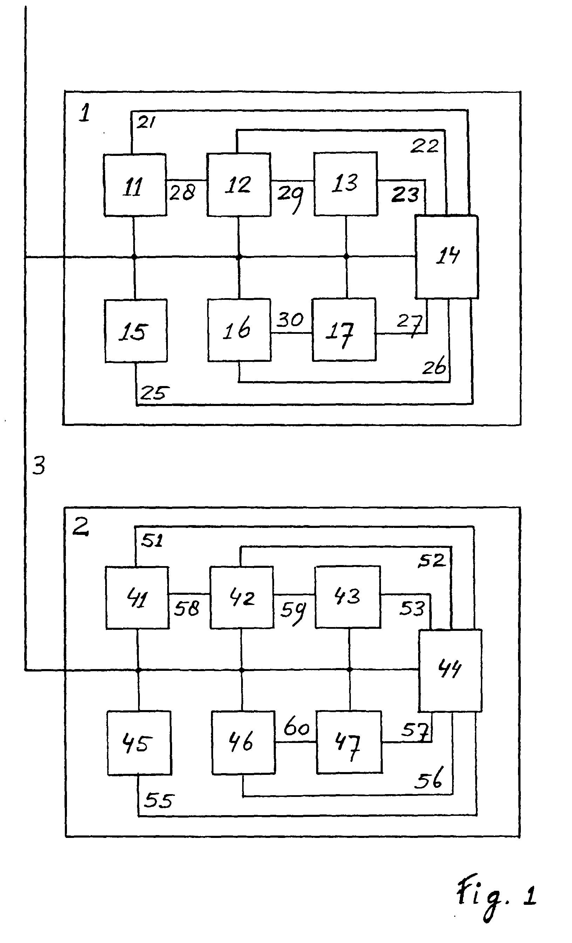

The invention will be further explained at the hand of an embodiment described with respect to a drawing, whereby
figure 1 discloses a telecommunication system according to the invention comprising analog terminals according to the invention.

The telecommunication system according to the invention as disclosed in figure 1 comprises a first analog terminal 1 and a second analog terminal 2 both coupled in parallel to an analog telephone line 3.

First analog terminal 1 is provided with first detection means 11 coupled to analog telephone line 3, first comparing means 12 coupled to first detection means 11 via a connection 28, first memory means 13 coupled to first comparing means 12 via a connection 29, first processor means 14 coupled to analog telephone line 3, first telephone means 15 coupled to analog telephone line 3, first generation means 16 coupled to analog telephone line 3, and first activating/deactivating means 17 coupled to first generation means 16 via a connection 30. First processor means 14 are coupled to fist detection means 11 via a control connection 21, to first comparing means 12 via a control connection 22, to first memory means 13 via a control connection 23, to first telephone means 15 via control connection 25, to first generation means 16 via a control connection 26, and to first activating/deactivating means 17 via a control connection 27.

Second analog terminal 2 is provided with second detection means 41 coupled to analog telephone line 3, second comparing means 42 coupled to second detection means 41 via a connection 58, second memory means 43 coupled to second comparing means 42 via a connection 59, second processor means 44 coupled to analog telephone line 3, second telephone means 45 coupled to analog telephone line 3, second generation means 46 coupled to analog telephone line 3, and second activating/deactivating means 47 coupled to second generation means 46 via a connection 60. Second processor means 44 are coupled to second detection means 41 via a control connection 51, to second comparing means 42 via a control connection 52, to second memory means 43 via a control connection 53, to second telephone means 45 via control connection 55, to second generation means 46 via a control connection 56, and to second activating/deactivating means 47 via a control connection 57.

The system according to the invention functions as follows. A signalling signal indicating an incoming call originating from a user arrives via line 3 and is detected inside terminal 1 by detection means 11, which inform processor means 14 via control connection 21. Such a signalling signal for example consists of a first (short) ring, then a calling line identification or CLI, and then a second (longer) ring. In response to the detection of said first ring, processor means 14 command memory means 13 via control connection 23 to generate one or more predefined signals stored in said memory means 13 and to supply them to comparing means 12 via connection 29. At the same time, detection means 11 detect the CLI and supply it to comparing means 12 via connection 28. The comparison result is supplied to processor means 14 via control connection 22, which in dependence of said comparison result control activating/deactivating means 17 via control connection 27 for activating/deactivating generation means 16 via connection 30.

Said signalling signal indicating said incoming call originating from said user arrives via line 3 and is also detected inside terminal 2 by detection means 41, which inform processor means 44 via control connection 51. Said signalling signal for example consists of said first (short) ring, then said calling line identification or CLI, and then said second (longer) ring. In response to the detection of said first ring, processor means 44 command memory means 43 via control connection 53 to generate one or more predefined signals stored in said memory means 43 and to supply them to comparing means 42 via connection 59. At the same time, detection means 41 detect the CLI and supply it to comparing means 42 via connection 58. The comparison result is supplied to processor means 44 via control connection 52, which in dependence of said comparison result control activating/deactivating means 47 via control connection 57 for activating/deactivating generation means 46 via connection 60.

In case of terminal 1 for example being located in the kitchen and terminal 2 being located in the studyroom, with said incoming call originating from the supermarket, according to a first embodiment, memory means 13 supply the stored CLI of the supermarket and memory means 43 supply for example the stored CLI of a colleague, resulting in activating/deactivating means 17 activating generation means 16 for generating an alerting signal at terminal 1 and resulting in activating/deactivating means 47 deactivating generation means 46 for not generating an alerting signal at terminal 2. According to a second embodiment, memory means 13 supply the stored CLI of the colleague, and memory means 43 supply the stored CLI of the supermarket, resulting in processor means 14 controlling activating/deactivating means 17 in such a way that generation means 16 are activated for generating an alerting signal at terminal 1 and resulting in processor means 44 controlling activating/deactivating means 47 in such a way that generation means 46 are deactivated for not generating an alerting signal at terminal 2.

According to a third embodiment, the CLI of the incoming call further comprises the number of terminal 1, which is different from the number of terminal 2, with memory means 13 supplying the number of terminal 1, and with memory means 43 supplying the number of terminal 2, resulting in processor means 14 controlling activating/deactivating means 17 in such a way that generation means 16 are activated for generating an alerting signal at terminal 1 and resulting in processor means 44 controlling activating/deactivating means 47 in such a way that generation means 46 are deactivated for not generating an alerting signal at terminal 2. According to a fourth embodiment, there are at least two kinds of numbers: firstly, a general number (like for example 123456) which forces each terminal to generate an alerting signal, and secondly an individual number per terminal (like for example 123457 for the first terminal and for example 123458 for the second terminal and for example 123459 for the third terminal etc.), which forces only the corresponding terminal to generate an alerting signal and which forces all the other terminals not to generate an alerting signal. Of course, the choise of said numbers can be made completely arbitrarily. Further embodiments and/or combinations of two or more of said embodiments should not be excluded.

In case the actual CLI's are stored in memory means 13,43, the user making the incoming call in general does not have to take any action, due to this CLI being generated by the exchange automatically. As an alternative, a special code (like the number of the destination) could be used which is added to the actual CLI, whereby this special code either is also generated by the exchange automatically, or is generated by said user knowing that he has the possibility to be connected with only one of a number of parallel terminals.

Of course, said terminals can be made even more sophisticated by introducing a time-dependent circuit for example in processor means 14,44, which circuit for example overrules the activating/deactivating means (for example via control connection 26,56, or as an alternative via control connection 27,57 etc.) after expiry of a time-interval to allow said alerting signal to be generated after expiry of said time-interval to allow an incoming call to be answered at a second terminal in case a first terminal has not been used for responding within said time-interval. Such a circuit could for example comprise a counter for counting the number of rings after the first detection of the cli and/or added special code. Then the circuit would automatically be stopped as soon as the rings have stopped. As an alternative, the answering at an other parallel terminal could be detected, for example by detection means 11,41, or via telephone circuit 15,45 (further comprising microphone- and loudspeakerfunctions etc.). In addition to or as an alternative for this time-dependency function, a cyclic function could be introduced.

According to an alternative, detection means 11,41 only detect said rings, with said CLI and/or added special code being detected by comparing means 12,42 directly. Further, one or more of said possibilities could be at least partly be integrated inside processor means 14,44.

## Claims

1. Telecommunication system comprising
- a first analog terminal system coupled to an analog telephone line and comprising
first detection means for detecting signalling signals arriving via said analog telephone line, and
first generation means coupled to said first detection means for generating alerting signals,
- a second analog terminal system coupled to said analog telephone line and comprising
second detection means for detecting signalling signals arriving via said analog telephone line, and
second generation means coupled to said second detection means for generating alerting signals,
characterised in that
- said first detection means comprise
first comparing means for comparing at least a first code signal of said signalling signals with a first predefined signal, and
first activating/deactivating means coupled to said first generation means for activating/deactivating said generating in dependence of said comparing,
- said second detection means comprise
second comparing means for comparing at least a second code signal of said signalling signal with a second predefined signal, and
second activating/deactivating means coupled to said second generation means for activating/deactivating said generating in dependence of said comparing.

2. Telecommunication system according to claim 1, characterised in that said first predefined signal and said second predefined signal are at least substantially different, with said first code signal and said second code signal either being at least substantially equal or being at least substantially different.

3. Telecommunication system according to claim 1 or 2, characterised in that said first code signal and said second code signal form pad of a signalling signal being a so-called calling line identification signal.

4. Telecommunication system according to claim 3, characterised in that said first code signal and said second code signal are caller identification signals.

5. Telecommunication system according to claim 1, 2 or 3, characterised in that said first code signal and said second code signal are additional code signals which have been added to caller identification signals.

6. Analog terminal system coupled to an analog telephone line and comprising
detection means for detecting signalling signals arriving via said analog telephone line, and
generation means coupled to said first detection means for generating alerting signals,
characterised in that said detection means comprise
comparing means for comparing at least a code signal of said signalling signals with a predefined signal, and
activating/deactivating means coupled to said generation means for activating/deactivating said generating in dependence of said comparing.

7. Analog terminal system according to claim 6, characterised in that said first predefined signal is at least substantially different from a further predefined signal of a further analog terminal system, with said code signal and a further code signal to be compared by said further analog terminal system with said further predefined signal either being at least substantially equal or being at least substantially different.

8. Analog terminal system according to claim 6 or 7, characterised in that said code signal and said further code signal form part of a signalling signal being a so-called calling line identification signal.

9. Analog terminal system according to claim 8, characterised in that said code signal and said further code signal are caller identification signals.

10. Analog terminal system according to claim 8, characterised in that said code signal and said further code signal are additional code signals which have been added to caller identification signals.
